# EUROPEAN PATENT APPLICATION

(11) **EP 1 705 068 A1**
(43) Date of publication of application: **27.09.2006**
(21) Application number: 04807068.4
(22) Date of filing: 15.12.2004
(51) Int. Cl.: B60R 16/02, F16H 61/00, F16H 57/02

(54) **STRUCTURE FOR ATTACHING OIL-ENCLOSED EQUIPMENT AND CONTROL UNIT**

(30) Priority: 17.12.2003 JP 2003419760
(71) Applicant: Bosch Corporation, Shibuya-ku Tokyo 150-8360 (JP)
(72) Inventor: Kawaguchi, T., Bosch Automotive Systems Corp., Saitama, 3558603 (JP)
(74) Representative: Gesthuysen, von Rohr & Eggert
(86) International application number: PCT/JP2004/018709
(87) International publication number: WO 2005/058651

(57) **Abstract**

An oil inclusion device such as a transmission or the like and a control unit can be easily integrated, and furthermore, outside installation of electric wiring required between both becomes unnecessary. A junction connector portion 22 is integrally formed with a control unit 102 performing operation control of transmission 101, and the junction connector portion 22 fittingly inserts through a fitting hole 1a drilled in the transmission case 1, and the control unit 102 is integrally installed to the transmission 101 so that electric connection between the transmission 101 and the control unit 102 is performed by fitting a junction portion fitting connector 8 of the transmission 101 to a junction connector portion 22.

## Description

### TECHNICAL FIELD

The present invention relates to an installing structure of an oil inclusion device and a control unit thereof, and in particular, relates to improvement in easiness, cost reduction, and the like, of electrical wiring between both.

### BACKGROUND ART

Conventionally, as devices of this kind, for instance, a technology such that connectors for fitting to a transmission and an electronic controller for electronically controlling the transmission with each other respectively are provided, and both sets are integrated by fitting both connectors so that a conventional connection harness between both is made unnecessary has been well known (for instance, refer to Patent Document 1).

Furthermore, a technology such that an electronic control unit for electronically controlling a transmission is fixed on the outer surface of the transmission, and both are connected with a connection harness, has been well known (for instance, refer to Patent Document 2).

However, the former case has a disadvantage such that the connectors provided on both transmission and the electronic controller respectively, are high in cost due to necessity for rendering a waterproof function. Moreover, the connector on the transmission side further requires a sealing structure to prevent leakage of the inner oil to the outside, and a highly reliable sealing structure is required, which results not only in further cost increase, but also in low ease of assembling during the production process because these two connectors must be installed respectively.

On the other hand, in the latter case, though an electronic control unit is installed to a transmission, since it has a structure such that the electric wiring required between both is installed outside using a connector, an outside wiring work is still required even when a wiring distance becomes short. Therefore, it is hard to say that the assembling easiness and liability in the production process are not enough, which is a disadvantage of this case.

Patent Document 1: Japanese Patent Application Laid-open No. Hei 5-196130

Patent Document 2: Japanese Patent Application Laid-open No. 2002-301994

### DISCLOSURE OF THE INVENTION

The present invention is carried out in consideration of the above circumstance, and an object of the present invention is to provide an installation structure of an oil inclusion device and a control unit for the device, reducing as much as possible the amount of electric wiring outside the oil inclusion device, such as a transmission or the like, and between the control units, providing excellent ease of assembly, and realizing price reduction.

Another object of the present invention is to provide an installation structure of an oil inclusion device and a control unit for the device in which an oil inclusion device such as a transmission or the like and the control unit thereof can be easily integrated, and electric wiring required between both can be provided without installing them in the outside.

Still another object of the present invention is to provide an installation structure of a transmission and a control unit thereof, in which an oil inclusion device such as a transmission or the like and the control unit thereof are integrated so that adjustment of the transmission itself in a transmission manufacturer can be performed easily.

Yet another object of the present invention is to provide an installation structure of a transmission and the control unit thereof which makes it possible to integrate the control unit with a transmission already produced.

According to an embodiment of the present invention, an installation structure of an oil inclusion device and a control unit thereof are provided, in which the control unit to perform operation control of the oil inclusion device is attached integrally to the above-described oil inclusion device so as to enable connection of electric signal lines between the oil inclusion device and the control unit via the attachment portion.

The present invention performs an effect such that electrical wiring required between the oil inclusion device and the control unit thereof can be installed differently from a conventional manner, without requiring the installation in the outside of both facilities, and moreover, it is possible to perform the electrical wiring in the inside with shorter wiring compared with a conventional manner.

It also performs an effect to realize improvement in the assembling easiness, and improvement in the liability of device, because the electric wiring necessary between the oil inclusion device and the control unit does not need to be provided outside thereof unlike with a conventional manner.

Furthermore, a junction connector conventionally provided in the oil inclusion device for the electrical wiring between the oil inclusion device and the control unit thereof becomes unnecessary, which performs an effect to realize cost reduction of the device by reduction of parts and by making the installation work unnecessary.

Further, since the transmission as an oil inclusion device and the control unit thereof can be easily integrated, it performs an effect such that adjustment of the transmission individual in a production maker of the transmission can easily realized.

Furthermore, since the installation structure of the oil inclusion device makes it possible for even an already completed oil inclusion device to be equipped with the control unit integrally, it performs an effect that it is also applicable to an existing oil inclusion device.

### BRIEF DESCRIPTION OF DRAWINGS

FIG. 1 is a structural view showing mainly an electrical mutual relation between a transmission and a control unit, to which an installation structure of the oil inclusion device and the control unit thereof of an embodiment in the present invention is applied;
FIG. 2 is an entire perspective view of the control unit in the embodiment of the present invention;
FIG. 3 is an entire perspective view in an exploded state of the control unit in the embodiment of the present invention;
FIG. 4 is a front view containing a partial cross section to explain the manner in which the control substrate is housed and wire-bonded in the control unit in the embodiment of the present invention, and the situation of the installation portion of the control unit relative to the transmission case;
FIG. 5 is an entire perspective view showing an installation state of the control unit to the transmission in the embodiment of the present invention; and
Fig. 6 is an entire perspective view showing other structural example of the control unit in the embodiment of the present invention.

### BEST MODE FOR CARRYING OUT THE INVENTION

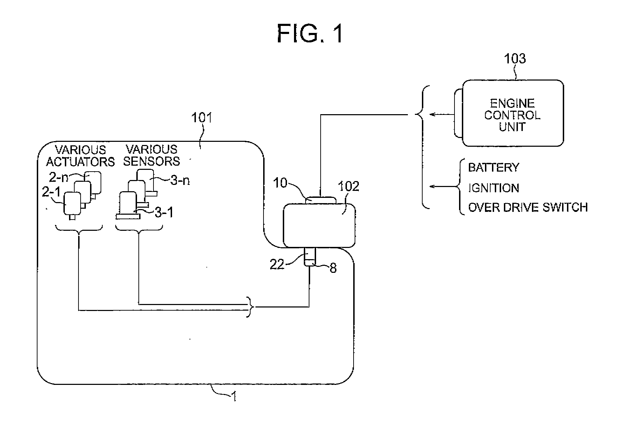

An embodiment of the present invention will be explained below with reference to FIG. 1 to FIG. 6.

It should be noted that members, arrangement, and the like explained below are not limited to the present invention and can be modified within the gist of the present invention.

First, the installation structure of the oil inclusion device and the control unit thereof in the embodiment of the present invention is an instance applied to a transmission 101 and a control unit 102 thereof for a vehicle.

A schematic structural example of the transmission 101 and the control unit 102 in an embodiment of the present invention from mainly an electric point of view is shown in FIG. 1, and the schematic structural of the transmission 101 and the control unit 102 will be explained hereinafter with reference to the same drawing.

The transmission 101 is a well-known device formed with a transmission case 1, in which well-known mechanical parts necessary for a gearshift such as gears or the like (not shown), and various actuators 2-1 to 2-n to drive gears and the like (not shown), and various sensors 3-1 to 3-n and the like necessary to operation control of the transmission 101 are housed.

In addition to signals from the transmission 101, namely, output signals from the previous various sensors 3-1 to 3-n, and control signals from an engine control unit 103 of a vehicle, opening and closing signals of an ignition switch (not shown) and an overdriving switch (not shown) are inputted to the control unit 102. By performing drive control of various electromagnetic actuators 2-1 to 2-n in the transmission 101 based on these various signals, operation control of the transmission 101 is carried out so as to obtain a desired gearshift.

A control unit 102 in the embodiment of the present invention is a device in which the control unit 102 is integrally attached to the transmission case 1, though the detail will be described later.

It should be noted that wiring from various electromagnetic actuators 2-1 to 2-n and various sensors 3-1 to 3-n are collected to a junction portion fitting connector 8, and the junction portion fitting connector 8 is fitted to a junction connector portion 22 of the control unit 102, which will be described later, so that an electrical connection to the control unit 102 can be obtained (refer to FIG. 1).

In addition, wiring for signals giving and receiving between the engine control unit 103 and the control unit 102, and wiring from a battery, an ignition switch, and an overdrive switch (not shown) are collected to an outer connector 10, and the outer connector 10 is attached to the control unit 102 (the detail will be described later), which makes it possible to input and output of signals to the control unit 102 (refer to FIG. 1).

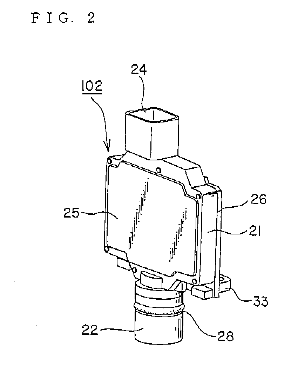

Next, a concrete structure of the control unit 102 in the embodiment of the present invention will be explained next referring to FIGs. 2 to 5.

First, the structure of the control unit 102 in the embodiment of the present invention will be generally explained. The control unit 102 has a frame member 21, formed in a somewhat flat shape overall and a schematic rectangular parallelepiped exterior shape as shown in FIG. 2, and a junction connector portion 22 is integrally formed on a side surface of the frame member 21 and an outer connector connection portion 24 is integrally formed on the other side surface of the frame member 21 (the detail will be described later).

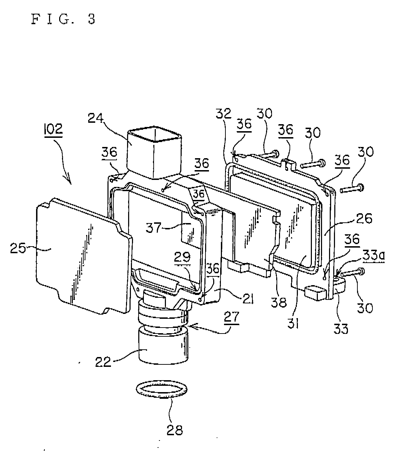

A more concrete structure of such a control unit 102 will be explained referring to FIGs. 2 and 3.

The control unit 102 mainly includes the frame member 21 including two opening surfaces, and first and second lid members 25 and 26 respectively closing the two opening surfaces of the frame member 21, and a control substrate 37 is housed in the frame member 21 as will be described.

The frame member 21, a somewhat flat, hollow, and almost rectangular, has two plane surface portions having the widest areas formed on the opening surfaces and are formed in a hollow frame shape as a whole. Further, the frame member 21 has a junction connector portion 22 integrally formed protrusively at almost the center of a side surface. The exterior shape of the junction connector portion 22 is formed in a cylindrical shape.

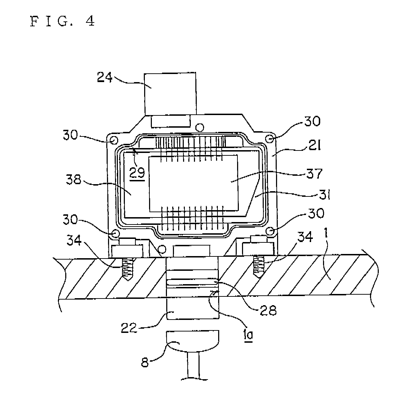

Here, in the embodiment of the present invention, since the transmission 101 and the control unit 102 are integrated by fittingly inserting the junction connector portion 22 to an attachment hole 1a drilled in the transmission case 1, the outer diameter of the junction connector portion 22 is set to be nearly coincided with the inner diameter of the attachment hole 1a. (refer to FIG. 4).

In addition, a circular groove 27 is depressedly provided in the outer circumferential direction at a suitable position on the outer circumferential surface of the junction connector portion 22, so that an o-ring 28 to maintain airtight in the inside of the transmission case 1 can be fitted in (refer to FIG. 4).

Furthermore, the outer connector connection portion 24 is integrally formed on the other side surface of the frame member 21, namely, on a side surface on the opposite side of the side surface, on which the junction connector portion 22 is formed in the embodiment of the present invention. The outer connector 10 (refer to FIG. 1) described previously is fitted in an outer connector connection portion 23 so as to be electrically connected to the control substrate 37 which will be described later.

Furthermore, a first circular step portion 29 is formed in which the peripheral portion of the first lid member 25 is fitted in an opening surface side of the frame member 21, and a second circular step portion (not shown) is formed similarly to the first circular step portion 29 in which the peripheral portion of the second lid member is fitted in the other opening surface side.

The first lid member 25 in the embodiment of the present invention is formed in a flat plate shape so as to fix to the first circular step portion 29 of the frame member 21 by welding or with adhesives.

Here, the frame member 21 and the first lid member 25 in the embodiment of the present invention are produced by molding process such as injection molding using a material satisfactory in heat resistance, strength, and the like, and suitable for a molding process, generally called engineering plastic.

Although the second lid member 26 in the embodiment of the present invention is similar to the first lid member 25 in the point that the entire exterior shape is formed in somewhat flat using metal such as aluminum, it is different in structure from the first lid member 25 in the following point.

First, formed protruding from one surface of the second lid member 26, namely, on the surface on the side to close the opening surface of the frame member 21 is a rectangular shaped placing portion 31 to place a control substrate 37 fixed to a base plate 38 which will be described later. The placing portion 31 is formed in a magnitude to be just positioned in the hollow portion of the frame member 21 when the second lid member 26 is fixed to the frame member 21 with a rivet 30 (refer to FIG. 4). A waterproof seal 32 to maintain airtightness of the frame member 21 is wrapped on the peripheral surface of the placing portion 31 when the second lid member 26 is fixed to the frame member 21, and the placing portion 31 is positioned in the frame member 21.

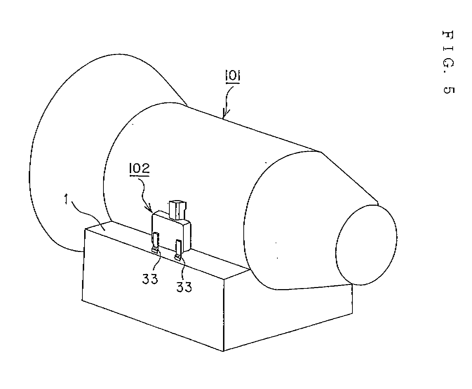

On the opposite side to the plane surface portion on which the placing portion 31 of the second lid member 26 is formed, screw fixing portions 33 are protruded respectively in the vicinity of two opposing corners (refer to FIGs. 3 and 5). The screw fixing portion 33 is provided with a screw hole 34a through which a screw 34 is inserted by drilling when the control unit 102 is screw-fixed to the transmission 101 as will be described later. Accordingly, the second lid member 26 serves as an installation bracket to attach the control unit 102 to the transmission case 1.

It should be noted that in the embodiment of the present invention, since the second lid member 26 and the frame member 21 are fixed to each other using the rivet 30, a suitable number of rivet holes 36 to insert through the rivet 30 are drilled at suitable positions of respective peripheral portions.

The control substrate 37 is the one on which an electronic circuit to perform driving control of the electromagnetic actuator 2-1 to 2-n in the transmission 101 is placed as previously described, and in the embodiment of the present invention, an electronic part is formed by applying a semiconductor production technology to, for instance, a ceramic substrate and, at the same time, an electronic substrate called a micro-hybrid substrate formed by mounting an integrated circuit is used.

The control substrate 37 in the embodiment of the present invention is, first, formed in a plate using, for instance, aluminum, and fixed on a base plate 38, in which the magnitude of its plane surface portion is larger than the control substrate 37 and smaller than the placing portion 31, with a thermal conductive adhesive. Furthermore, a plane portion on the opposite side where the control substrate 37 of the base plate 38 is fixed, is fixed to the placing portion 31 of the second lid member 26 using a thermal conductive adhesive so that the control substrate 37 is fixed to the placing portion 31 via the base plate 38. Thus, connection of the control substrate 37 and the outside is achieved by connecting with a lead frame portion (omission of drawing) extended from the junction connector portion 22 or the outer connector connection portion 24 in a state such that the control substrate 37 is fixed to the second lid member 26 and placed in the inside of the frame member 21 as described above, using a wire bonding (refer to FIG. 4).

The basic assembling process of the control unit 102 in the above structure will be explained next. First, the control substrate 37 is fixed to the base plate 38 with a thermal conductive adhesive, and then, the surface on the opposite side of the surface, to which the control substrate 37 of the base plate 38 is fixed, is fixed to the placing portion 31 of the second lid member 26 with a thermal conductive adhesive. Then, the second lid member 26 is abutted on the frame member 21 so that the placing portion 31 is positioned in the hollow portion of the frame member 21, and the second lid member 26 and the frame member 21 are fixed to each other by riveting with the rivet 30. Note that when the second lid member 26 is attached to the frame member 21, the second lid member 26 is arranged so that the screw fixing portion 33 is positioned on the junction connector portion 22 side.

In such a state, wire bonding necessary between the control substrate 37 and the junction connector portion 22 or the outer connector connection portion 24 is given from the other opening surface side of the frame member 21, and then, basic assembling of the control unit 102 can be completed by positioning the first lid member 25 on the opening surface of the frame member 21 and fixing it by adhering or welding using an adhesive (refer to FIG. 2).

Next, attachment of such a control unit 102 to the transmission 101 will be explained. First, the O-ring 28 is fitted into the circular groove 27 of the junction connector portion 22. Then, the junction connector portion 22 is inserted into the attachment hole 1a of the transmission case 1 from the tip portion of the junction connector portion 22 (refer to FIG. 4). Note that, at this time, the second lid member 26 is arranged to be positioned not on the transmission 101 side, but on the outside (refer to FIG. 5). Then, the control unit 102 is integrally installed to the transmission 101 to fix by screwing the screw 34 from the screw hole 33a side of the screw fixing portion 33 so that the screw 34 is screwed into the screw holes 33a of the screw fixing portion 33 of the second lid member 26 and a screw hole (not shown) on the transmission case 1 side. Note that since FIG. 5 shows schematically an appearance of attachment of the control unit 102 to the transmission 101, a detailed shape of the control unit 102 is omitted.

Thereafter, in the transmission case 1, while the junction portion fitting connector 8 is connected to the junction connector 22 (refer to FIGs. 1 and 4), and the outer connector 10 is connected to the outer connector connection portion 24 of the control unit 102 to complete the connection work.

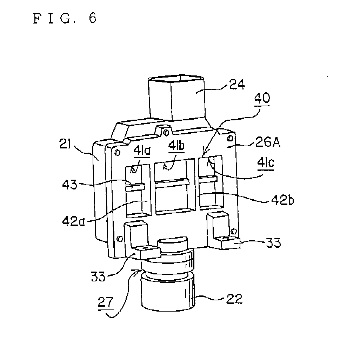

The control unit 102A in the second structural example is explained referring to FIG. 6 next. The same structural elements as the structural example shown in previous FIGs. 2 and 3 are attached with the same symbols, and the detailed explanation thereof will be omitted.

In the control unit 102A shown in FIG. 6, the structures of the second lid member 26A are particularly different from the examples shown in previous FIGs. 2 and 3.

That is, the second lid member 26A shown in FIG. 6 has a lattice unit 40 in a suitable size, formed on the side of a surface, on which the screw fixing portion 33 is provided to further improve cooling and heat releasing properties of the control substrate 37 fixed to the second lid member 26A. That is, on a surface, on which the screw fixing units 33 of the second lid member 26A are provided, three depressed portions 41a to 41c having quadrangle opening surfaces are formed side by side (in the right and left directions on the paper in FIG. 6) putting two partition walls 42a and 42b between the depressed portions. Ribs 43 are formed so as to connect the partition walls 42a and 42b to reinforce the mechanical strength. It is preferable for such a second lid member 26A to be formed with, for instance, aluminum, similarly to the previous second lid member 2.

In such a structure, the heat releasing and cooling properties of the second lid member 26A to the control substrate 37 are further improved compared with the structural examples shown in FIGs. 2 and 3. Here, the number of the depressed portions 41a to 41c and that of the ribs 43 are not required to be limited to the above examples, and are arbitrarily selectable.

It should be noted that although the electrical connection between an electric part inside the transmission 101 and the control unit 102 is structured to carry out by fitting the junction portion fitting connector 8 into the junction connector portion 22, it is also adoptable to make a structure to form the junction connector portion 22 to be a simple hollow cylindrical shape and to directly connect wiring between electrical parts inside the transmission 101 and the control unit 102 without through connectors.

Furthermore, in the embodiment of the present invention, though the placing portion 31 is protrusively formed on the second lid member 26, it is of course possible that this portion can be a plane plate without protrusively forming such a placing portion 31.

### INDUSTRIAL AVAILABILITY

It is possible to provide electric wiring between electric circuits housed in an oil inclusion device and a control unit, and electric wiring between an oil inclusion device and external electric circuits other than control units via an attachment portion in which an oil inclusion device and a control unit are integrally attached, and it is possible to apply to a usage even not to be preferred to provide or to be required to avoid respective electric wiring between an oil inclusion device and a control unit, and between an oil inclusion device and an external electric circuit other than a control unit.

## Claims

1. An installation structure of an oil inclusion device and a control unit, wherein
a control unit performing operation control of an oil inclusion device is integrally attached on said oil inclusion device, to make it possible to connect an electric signal line between said oil inclusion device and said control unit via the attached portion.

2. An installation structure of an oil inclusion device and a control unit, wherein
a junction connector unit used to give and receive an electrical signal between inside and outside of an oil inclusion device is integrally formed with a control unit performing operation control of said oil inclusion device, and the control unit is integrally attached on said oil inclusion device.

3. The installation structure of an oil inclusion device and a control unit according to claim 2, wherein
the control unit is integrally attached on the oil inclusion device at a portion of a junction connector unit.

4. The installation structure of an oil inclusion device and a control unit according to claim 3,
wherein the control unit comprises a frame member formed in a hollow frame, and a junction connector unit is integrally formed on a side surface portion of the frame member;
while two opening surfaces of said frame member are closed by lid members attaching to the frame member respectively; and
on one of said two lid members, a control substrate is placed on said opening surface side, and housed inside said frame member.

5. The installation structure of an oil inclusion device and a control unit according to claim 4,
wherein one of lid members on which the control substrate is placed is made of metal; and
wherein the control unit attaches to the oil inclusion device so that said one of the lid members made of metal is on the opposite side of the oil inclusion device.

6. A transmission structured to perform transmission operation according to a control signal inputted from outside,
wherein a junction connector unit used to give and receive an electric signal between inside and outside of the oil inclusion device is integrally provided with a control unit performing operation control of said transmission, and the control unit is integrally attached to said transmission.

7. The transmission according to claim 6,
wherein said control unit is integrally attached to the transmission at a portion of the junction connector unit.

8. The transmission according to claim 7,
wherein the control unit comprises a frame member formed in a hollow frame, and a junction connector unit is integrally formed on a side surface portion of the frame member;
while two opening surfaces of said frame member are closed by lid members attaching to the frame member respectively; and
on one of said two lid members, a control substrate is placed on said opening surface side, and housed inside said frame member.

9. The transmission according to claim 8,
wherein one of lid members on which the control substrate is placed is made of metal; and
wherein the control unit attaches to the transmission so that said one of the lid members made of metal is on the opposite side of the transmission.
